# EUROPEAN PATENT APPLICATION

(11) **EP 2 369 179 A1**
(43) Date of publication of application: **28.09.2011**
(21) Application number: 10075111.4
(22) Date of filing: 12.03.2010
(51) Int. Cl.: F03D 11/04

(54) **Quick connection systems for offshore wind turbine installations**

(71) Applicant: Leenaars, Cees Eugen Jochem, 3225LE Hellevoetsluis (NL)
(72) Inventor: Leenaars, Cees Eugen Jochem, 3225LE Hellevoetsluis (NL)

(57) **Abstract**

In order to deal with the time consuming connection methods, a quick connection system has been developed for the offshore wind turbine installation industry. The installation sequence of a complete offshore wind turbine starts with the installation of all piles, followed by installation of the foundation to the piles. Finally, the wind turbine is connected to the top of the foundation.

The invention consists of a quick connection system for the pile-foundation interface and for the foundation-wind turbine interface. The foundation is connected to the piles by means of a locking ring which, after rotating using the manipulator, forms a permanent connection between foundation and piles. For the foundation-wind turbine interface the foundation is fitted with a stabbing cone which allows the wind turbine to be lowered onto the foundation with a relatively large tolerance in accuracy. Once the stabbing pin has entered the wind turbine receiver, guiding fingers automatically rotate the wind turbine such that the bolt holes fully align. The dynamic forces which occur at impact are dampened by an elastomer spring located behind the receiver.

## Description

### Background of the invention

Bottom-fixed offshore wind turbines consist of two main components, namely the foundation structure and the wind turbine itself. The purpose of the foundation is to support the wind turbine above the sea and waves. Normal practice is to first place the (jacket) foundation on the sea bottom and driving piles into the sea bed. A permanent connection between piles and foundation is usually done by means of grouting (type of cementing). This process is time consuming because it takes several hours for the grout to fully harden.

Once the foundation is installed the wind turbine is installed on top of the foundation. This is done by connecting the bottom flange of the tower to the foundation with bolts. Additional steps are required to ensure that the wind turbine is completely level.

The installation process as described above requires a stable working platform because the wind turbine has to be lowered slowly onto the foundation to avoid damage to the internal components. Additionally, high accuracy is required for the alignment of the bolt holes. For this reason installation work is usually performed from ajackup barge.

### Description of the invention

In order to deal with the time consuming connection methods and the necessity of jackup barges, a quick connection system has been developed for the offshore wind turbine installation industry. The invention consists of a separate connection system for the pile-foundation interface (A) and the foundation-wind turbine interface (B). The installation sequence of a complete offshore wind turbine starts with the installation of all piles. Positioning can be done using a temporary template through which the piles are driven. The template assures that the piles are located in the exact correction positions during hammering such that once the piles are installed, the foundation is fully aligned with the piles. It is required that the piles are not fully driven into the soil and the top ends are partially above the sea bed level. Additionally, all piles must be completely level for the foundation and the wind turbine to be level as well. This can, for example, be done by means of an underwater laser measurement system incorporated within the template.

Once the piles are installed, the foundation is lowered onto the top ends of the piles and the connections are made between the legs of the foundation and the piles using system (A). Once the foundation is installed, the preassembled wind turbine can be lifted onto the foundation and connected using system (B). Detail descriptions of the quick connection systems are given below:

### Quick connection (A): Pile-foundation interface

The legs of the foundation are lowered over the top ends of the piles which are above the sea bed level. An inner ring in each leg prevents the foundation from further moving down and supports the foundation on top of the piles. Once the foundation is fully supported by the piles, a locking ring and manipulator are lowered through each leg. The manipulator is used to rotate the locking ring. A number of angled teeth are fitted on the locking ring and on the inside of the pile. The teeth on the ring tighten and lock itself into the teeth of the pile if it is rotated by the manipulator. The leg is connected to the pile by inserting a pin through the locking ring. The manipulator can be withdrawn through the leg and re-used.

### Quick connection (B): Foundation-wind turbine interface

The top of the foundation is fitted with a stabbing cone, which makes it possible for the preassembled wind turbine to be lowered onto the cone and the wind turbine will self-position and globally centre itself. This has the advantage that more inaccuracy in lowering of the wind turbine is tolerated compared to conventional methods whereby bolt holes must align. The installation of the wind turbine can thus be done from any free-floating crane vessel or ship.

Internal wind turbine components are relatively sensitive to damage caused during transportation and installation. The impact of the wind turbine on contact with the foundation will induce high accelerations. In order reduce the risk of damage, the wind turbine is fitted internally with an elastomer spring which acts as a damper. When the wind turbine is being lowered the stabbing cone will hit a receiver. This receiver compresses the elastomer spring.

The wind turbine tower has a flange on the bottom which rests on the top flange of the foundation. A permanent connection between foundation and wind turbine is made by a number of bolts between the flanges of both structures. This would also requires all bolt holes to align. In order to achieve this, both the wind turbine tower and stabbing cone are fitted with guide fingers, which interlock when the wind turbine is lowered on top of the stabbing cone. The guide finger automatically rotates the wind turbine such that all bolt holes are automatically aligned.

### Brief description of the drawings

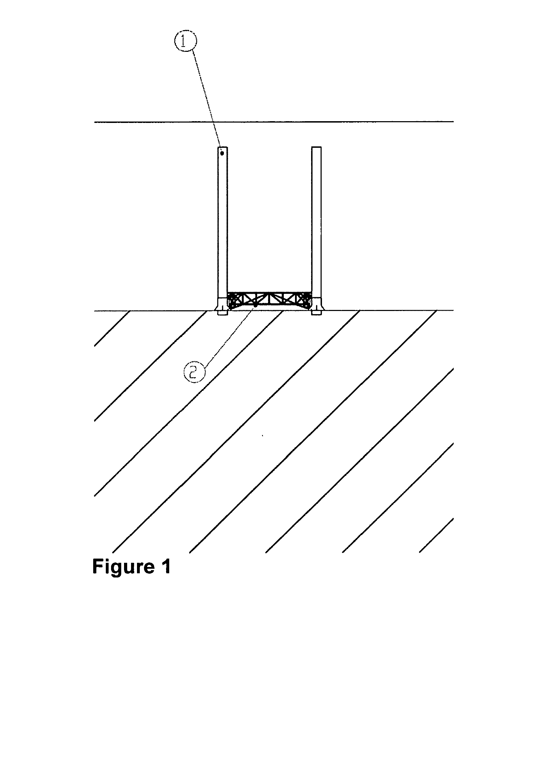

Figure 1 shows the template (2) with the prefitted piles (1) standing on the sea bottom. The piles are ready to be driven into the soil.

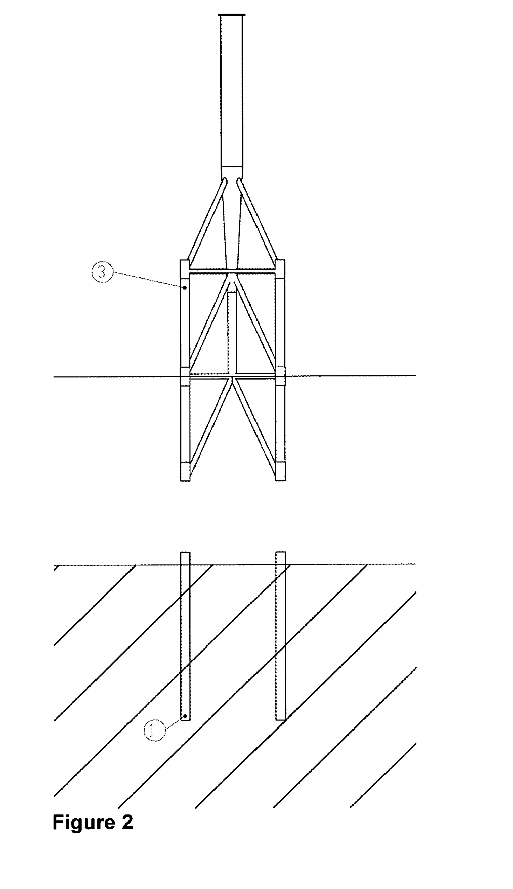

Figure 2 shows the foundation (3) being lowered on top of the installed piles (1).

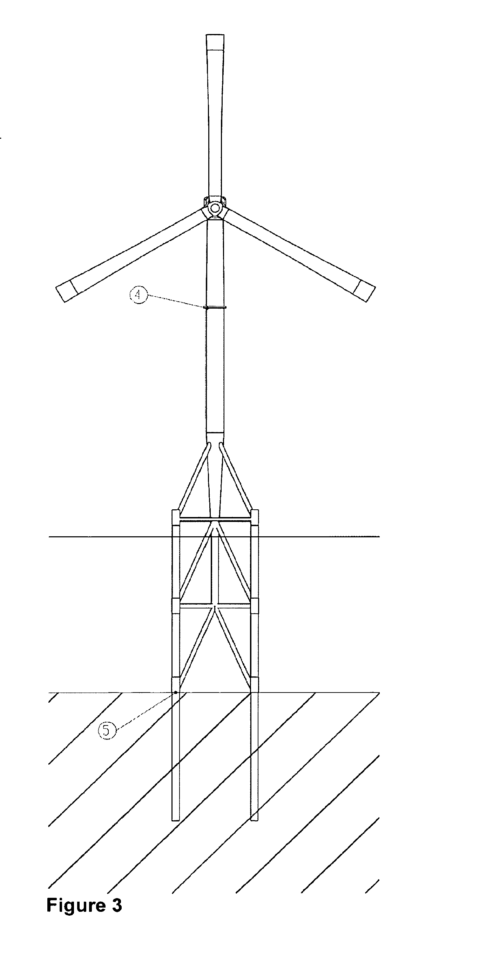

Figure 3 shows the installed piles, foundation and wind turbine. A quick connection has been made between the pile-foundation interface (5) and the foundation-wind turbine interface (4).

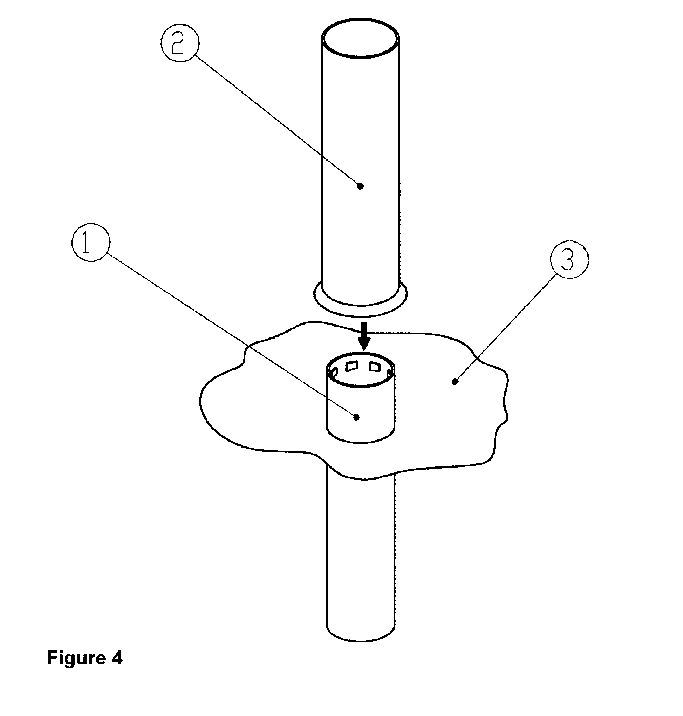

Figure 4 shows the foundation leg (2) being lowered onto the installed pile (1). The pile (1) end is partially above the sea bottom level (3).

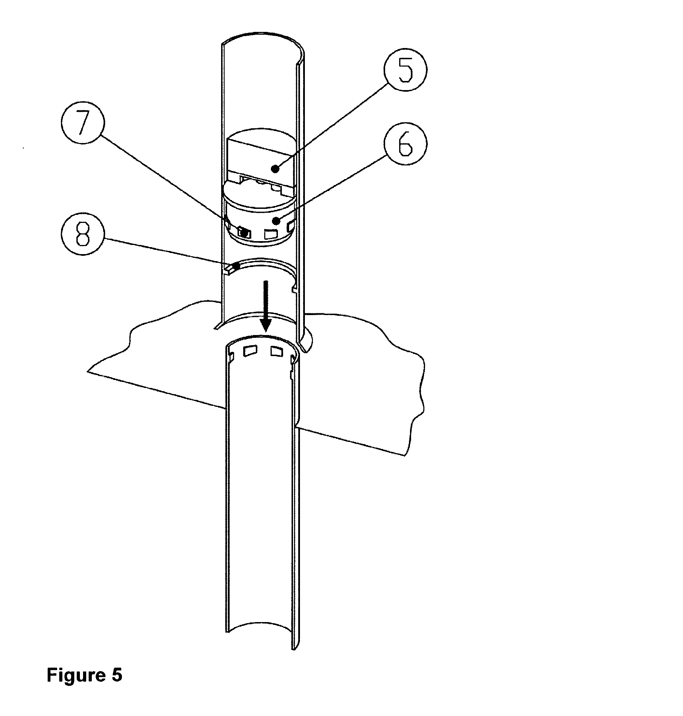

Figure 5 shows a cross section of the foundation leg. The internal components are the manipulator (5), locking ring (6), teeth (7) and stopper ring (8).

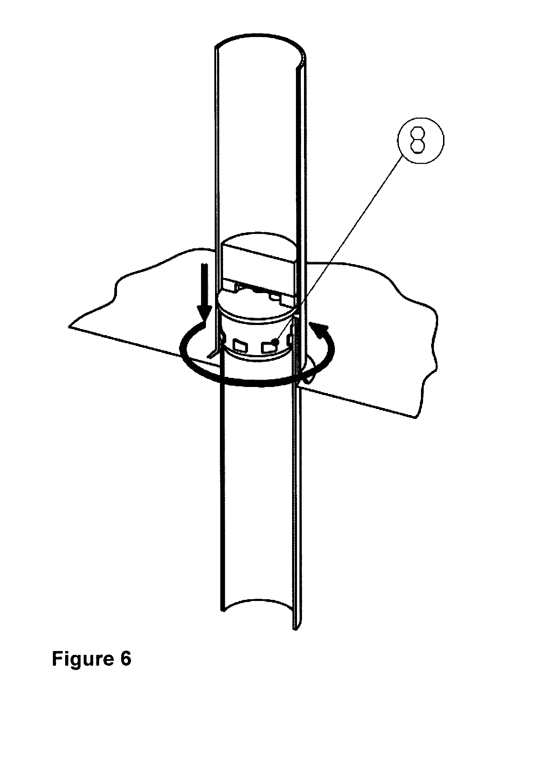

Figure 6 shows the leg lowered onto the pile. The manipulator rotates the locking ring such that the teeth (8) interlock.

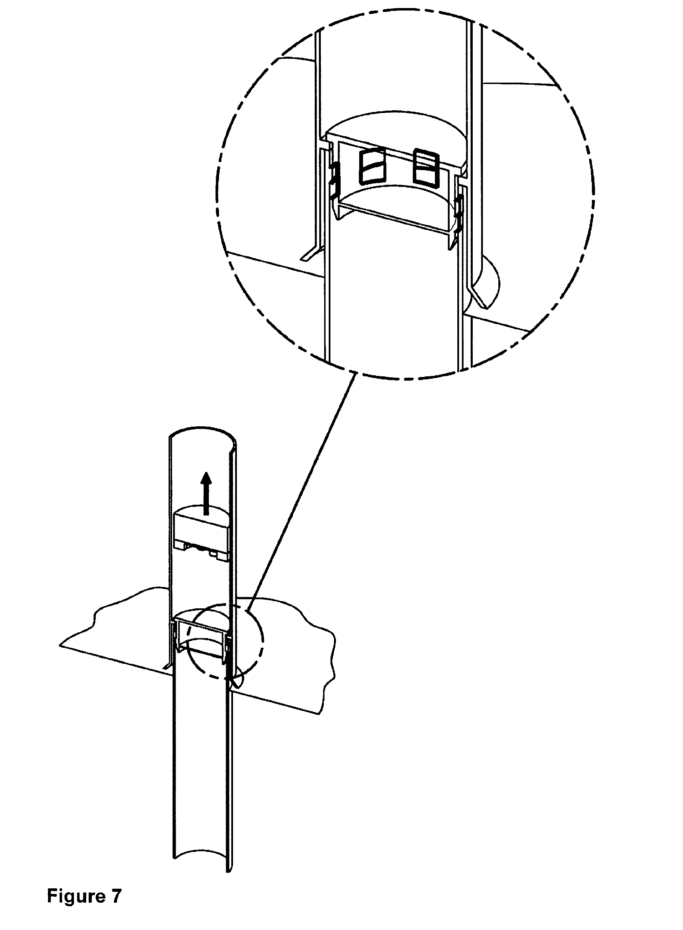

Figure 7 shows that the ring is tightened against the pile. The manipulator is withdrawn from the leg.

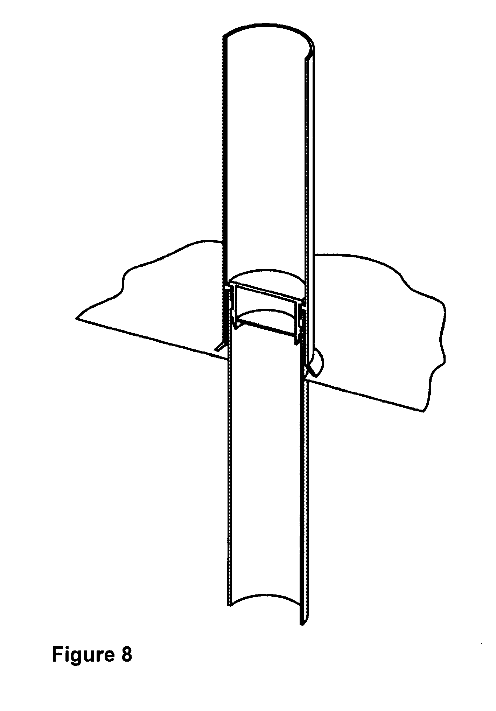

Figure 8 shows the foundation leg fully connected to the pile.

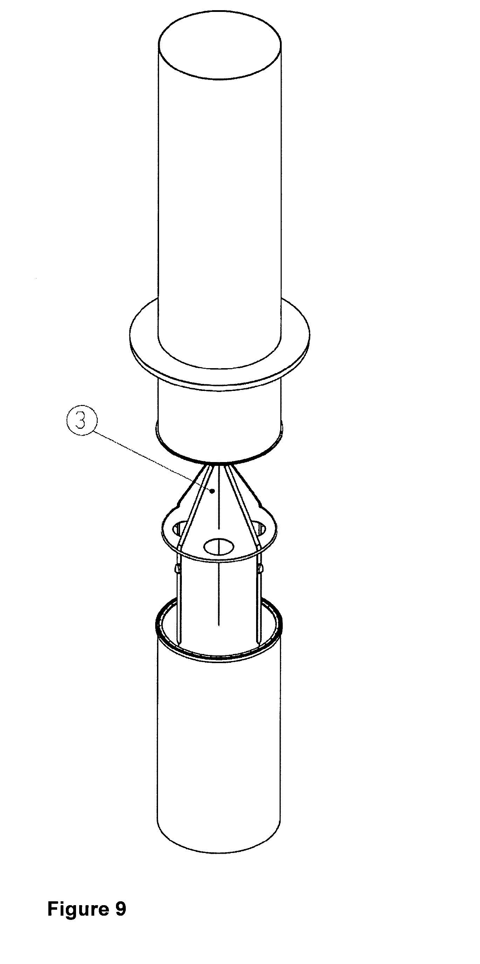

Figure 9 shows the interface between foundation and wind turbine. The foundation is fitted with a cone (3) such that the hollow end of the wind turbine can be stabbed onto this cone.

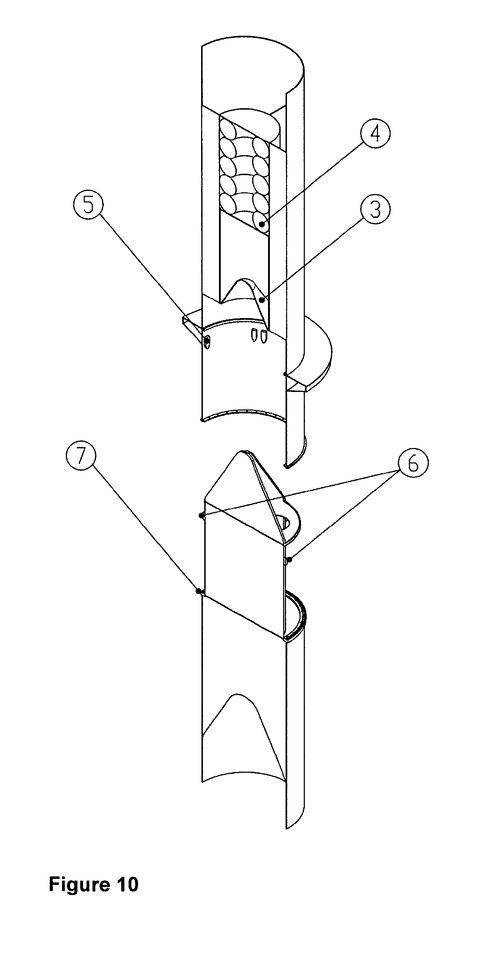

Figure 10 shows a cross section of the quick connections system of the foundation-wind turbine interface. Internal components are receiver (X), elastomer spring (4), wind turbine guide fingers (5) and foundation guide fingers (6).

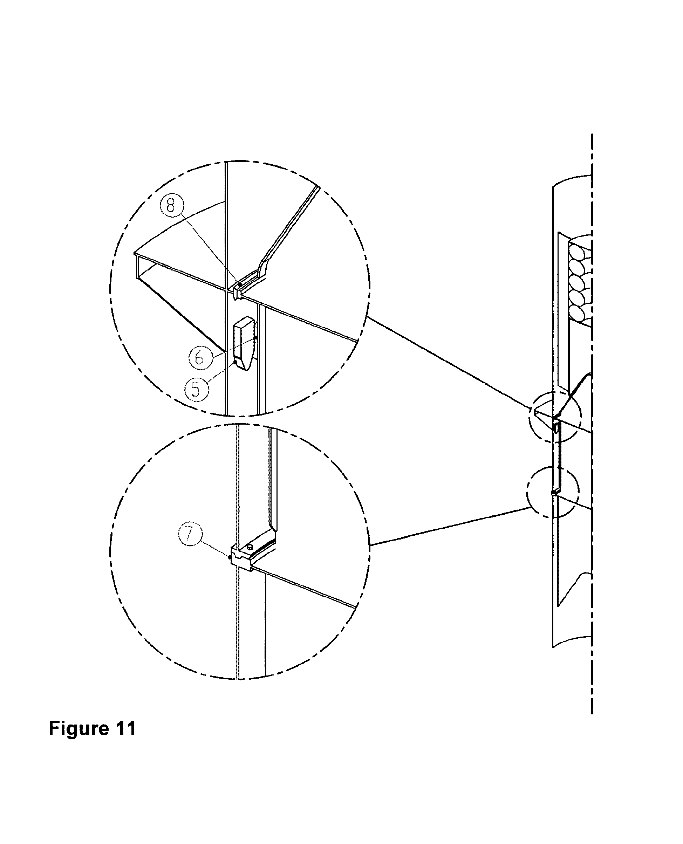

Figure 11 shows the internal alignment components. The guide fingers (5,6) are interlocked such that bolt holes are automatically aligned. Horizontal support between wind turbine and foundation is provided by horizontal flange guides (8) on both structures. Bolting is done at the vertical support flanges (7).

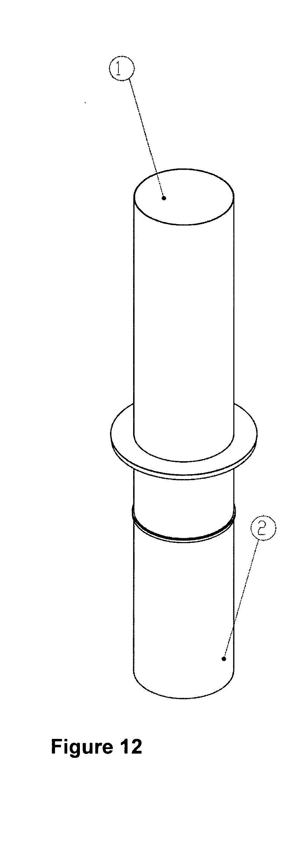

Figure 12 shows the wind turbine (1) full installed on top of its foundation (2).

## Claims

1. Quick connection systems to reduce installation time and costs of offshore wind turbines. The inventions consists of a quick connection system for the foundation-pile interface and for the foundation-wind turbine interface. Both system allow the foundation and wind turbine to be lowered onto its substructure with less accuracy required compared to conventional methods. This makes the need for a stable working platform i.e. jack up barges redundant.

2. A quick connection system for the pile-foundation interface which allows the foundation to be lowered onto the pre-installed piles and locked by means of a locking ring which twists a set of teeth in order to tighten the foundation onto the pile. The locking ring is operated using a manipulator which can be withdrawn after installation of the foundation.

3. A quick connection system according to claim 2 whereby the foundation has an internal support ring which rests on the pile once the foundation is fully lowered.

4. A quick connection system for the foundation-wind turbine interface which allows the pre-assembled wind turbine to be lowered onto its foundation and automatically aligned by means of guiding fingers and support flanges.

5. A quick connection system according to claim 4 whereby the foundation is fitted with a stabbing cone for global positioning of the wind turbine.

6. A quick connection system according to claim 4 whereby the wind turbine is internally fitted with a impact damping system which consists of a receiver and an elastomer spring.

7. A quick connection system according to claim 4 whereby the wind turbine and foundation are fitted with guiding fingers which interlock when the wind turbine is lowered. The bolt holes are thus automatically aligned.

## Amended claims

### Amended claims in accordance with Rule 137(2) EPC.

**1.** A quick connection system for the pile-foundation interface which allows the foundation to be lowered onto the pre-installed piles and locked into place by means of a locking ring which twists a set of teeth in order to tighten the foundation leg onto the pile, where the locking ring is operated using a manipulator which can be withdrawn through the foundation legs after installation and re-used.

**2.** A quick connection system according to Claim 1 **characterized by** the fact that the foundation has an internal support ring which rests on the pile and servers the purpose of carrying the full weight of the foundation once the foundation is fully lowered prior to the connection with the piles is made.

**3.** A quick connection system for the foundation-wind turbine interface which allows the preassembled wind turbine to be lowered completely onto its foundation in a single operation, whereby the foundation is fitted with a stabbing cone for primary global positioning of the wind turbine, followed by secondary positioning aids for accurate alignment of both structures and thus all bolt holes.

**4.** A quick connection system according to Claim 3 **characterized by** the fact that the wind turbine is automatically aligned by means of secondary positioning aids consisting of support flanges and guiding fingers on the internal side of the wind turbine mast and on the external side of the foundation connection piece.

**5.** A quick connection system according to Claim 3 **characterized by** the fact that the wind turbine is internally fitted with an impact damping system which consists of a receiver and an elastomer spring or any other damping material or device.

**6.** A quick connection system according to Claim 3 **characterized by** the fact that the wind turbine and foundation are fitted with guiding fingers which interlock when the wind turbine is lowered, thus automatically aligning both structures respectively to each other and hence all bolt holes in the flanges to sufficient accuracy.
